# EUROPÄISCHE PATENTANMELDUNG

(11) **EP 2 208 964 A1**
(43) Veröffentlichungstag der Anmeldung: **21.07.2010**
(21) Anmeldenummer: 10151065.9
(22) Anmeldetag: 19.01.2010
(51) Int. Cl.: G01C 7/06

(54) **Einrichtung und Verfahren zum Vermessen, insbesondere zum Vermessen von Tunnelausbrüchen**

(30) Priorität: 19.01.2009 AT 262009 U
(71) Anmelder: Geodata Ziviltechnikergesellschaft m.b.h., 8700 Leoben (AT)
(72) Erfinder: Rabensteiner, Klaus, 8010, Graz (AT); Pollak, Gerald, 8792, St.Peter-Freienstein (AT); Golser, Johann, 5020, Salzburg (AT); Meyer, Christoph, 8047, Hart bei Graz (AT); Wagner, Josef, 8103, Eisbach (AT); Keszleri, Markus, 8502, Lannach (AT); Scheidl, Stephan, 8184, Anger (AT)
(74) Vertreter: Müllner, Martin

(57) **Zusammenfassung**

Einrichtung zum Vermessen von Tunnelausbrüchen mit einem Laserscanner (1) und mit einer Totalstation (2), die beide mit einer Aufnahmeplattform (5) genau reproduzierbar verbunden sind. Gleichzeitig mit dem Scannen eines Abschnitts durch den Laserscanner (1) wird die Lage des Scanners (1) mittels der Totalstation (2), die mit dem Scanner (1) in einer festen, genau reproduzierbaren Verbindung steht, ermittelt. Dabei wird mit der mit der Auswerteeinrichtung verbundenen Totalstation (2) zu vorbestimmten Referenzpunkten gemessen und danach werden auf Grund einer zuvor durchgeführten Kalibrierung der relativen Lage von Laserscanner (1) und Totalstation (2) die Absolutkoordinaten der von dem Laserscanner (1) ermittelten Relativkoordinaten berechnet.

## Beschreibung

### Technisches Gebiet

Die Erfindung betrifft eine Einrichtung zum Vermessen, insbesondere zum Vermessen von Tunnelausbrüchen, nach dem Oberbegriff des Anspruchs 1. Weiters betrifft die Erfindung ein Verfahren zur Vermessung, insbesondere von Tunnelausbrüchen, nach dem Oberbegriff des Anspruchs 2.

### Stand der Technik

Der nachstehend beschriebene bekannte Tunnelscanner ist ein Messsystem, das speziell für den Einsatz in der Tunnelvermessung entwickelt wurde. Zielsetzung hierbei ist in erster Linie die geometrische Erfassung des Hohlraumes zu verschiedenen Zeitpunkten bzw. Bauphasen zur Ableitung von "IST-Profilen" und der Gegenüberstellung zu "SOLL-Profilen" sowie der Berechnung von Kubaturen und Bestimmung von Verschiebungen der Tunnellaibung. Die wesentliche Aufgabe besteht somit in der dreidimensionalen Erfassung bzw. Einmessung von Punkten in einem annähernd regelmäßigen Raster auf einer vorgegebenen Fläche, im konkreten Fall der Tunnellaibung. Als Zusatzinformation kann weiters die Reflexionseigenschaft der gescannten Oberfläche erfasst werden, woraus sich eine quasi photorealistische Textur des gescannten Objektes vergleichbar einem SW-Bild ergibt. Durch Erweiterung des Systems mittels einer Digitalkamera (SLR) lässt sich für das abgeleitete 3D-Modell eine Textur generieren, wodurch der Informationsgehalt wesentlich erhöht wird.

Eine derartige Einrichtung wurde z.B. durch die EP 1408344 A bekannt. Bei dieser bekannten Einrichtung ist der Laserscanner auf einer auf einem Stativ angeordneten Präzisionsdreheinrichtung montiert. Dabei wird die Präzisionsdreheinrichtung zuerst etwa parallel zur Tunnelachse ausgerichtet, um die Tunnellaibung punktweise zu vermessen. Danach wird der Laserscanner um einen vorbestimmten Winkel verdreht und seine Position zu einer Anzahl von Referenzpunkten, deren Absolutkoordinaten bekannt sind, vermessen. Diese Daten werden in einer Auswerteschaltung verarbeitet und die Absolutkoordinaten der neu vermessenen Punkte errechnet.

Bei dieser bekannten Lösung ergibt sich das Problem, dass bei jeder neuen Vermessung die Präzisionsdreheinrichtung auf die Vertikale eingerichtet werden muss, wenn man hohe Genauigkeit anstrebt. Außerdem müssen mit dem Laserscanner zwei Messungen nacheinander durchgeführt werden. Da beides vor Ort erfolgen muss, werden die Arbeiten bei einem Tunnelvortrieb entsprechend behindert und verzögert. Weiters erfordert die Präzisionsdreheinrichtung einen erheblichen Herstellungsaufwand.

### Darstellung der Erfindung

Ziel der Erfindung ist es, diese Nachteile zu vermeiden und eine Einrichtung der eingangs erwähnten Art vorzuschlagen, die eine rasche Vermessung eines Tunnelausbruches ermöglicht.

Erfindungsgemäß wird dies bei einer Einrichtung der eingangs erwähnten Art durch die kennzeichnenden Merkmale des Anspruchs 1 erreicht.

Durch die vorgeschlagenen Maßnahmen ist es möglich, die Lage der Einrichtung bzw. des Laserscanners auf einfache Weise mittels der Totalstation gegenüber von Referenzpunkten mit hoher Genauigkeit zu ermitteln, während der Laserscanner den Tunnelausbruch vermisst. Da der Laserscanner nur einmal scannen muss, ergibt sich der Vorteil, dass die Vermessung eines Tunnelausbruchs sehr rasch erfolgen kann und daher die weiteren Arbeiten an diesem nur wenig verzögert werden.

Weiters eignet sich das System zufolge der hohen Messgenauigkeit des Scanners und der Totalstation zur flächendeckenden Erfassung zeitzugeordneter vortriebsbedingter Gebirgsverschiebungen.

Ein weiteres Ziel der Erfindung ist es, ein Verfahren zur Vermessung, insbesondere eines Tunnelausbruchs, vorzuschlagen, das sich einfach und rasch durchführen lässt.

Ausgehend von einem Verfahren nach dem Oberbegriff des Anspruchs 2 werden daher die kennzeichnenden Merkmale des Anspruchs 2 vorgeschlagen.

Durch die vorgeschlagenen Verfahrensschritte ist es möglich, gleichzeitig mit der Vermessung eines neuen Abschnitts eines Tunnelausbruchs die Lage des Scanners selbst gegenüber Referenzpunkten zu ermitteln.

Besonders vorteilhaft ist es, die Merkmale des Anspruchs 3 vorzusehen. Dadurch ist es möglich, die Vermessung sehr rasch auszuführen. Dazu trägt auch der Umstand bei, dass keine Ausrichtung der Stehachse (Hochachse) der Totalstation bzw. des Scanners erforderlich ist.

### Kurze Beschreibung der Abbildungen der Zeichnungen

Die Erfindung wird nun anhand der Zeichnung näher erläutert. Dabei zeigt:

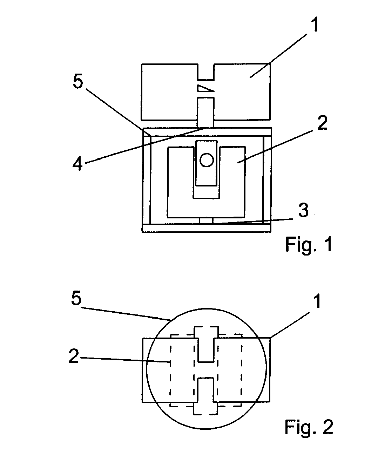

Fig. 1 schematisch eine Ansicht der erfindungsgemäßen Einrichtung; und Fig. 2 schematisch eine Draufsicht auf die Einrichtung nach Fig. 1.

### Weg(e) zur Ausführung der Erfindung

Die Einrichtung gemäß Fig. 1 und 2 weist einen Laserscanner 1 auf. Dieser ist über eine starre Verbindung 4 mit einer Aufnahmeplattform 5 reproduzierbar verbunden. Weiters ist diese Aufnahmeplattform 5 über eine starre Verbindung 3 reproduzierbar mit einer Totalstation 2 verbunden.

Der Laserscanner 1 und die Totalstation 2 werden auf einer geeigneten Aufnahmeplattform 5 übereinander montiert, wobei die Stehachsen der beiden Instrumente annähernd zusammenfallen. Die Aufnahmeplattform 5 ermöglicht eine Fixierung der beiden Instrumente in einer konstanten (d.h. reproduzierbaren) Lage zueinander, d.h. mit konstanten Parametern einer räumlichen Koordinatentransformation (drei Drehwinkeln und drei Translationen). Die Anordnung der Instrumente erfolgt hierbei übereinander (in Richtung der Z-Achse), sodass zwei Rotationen (Drehungen um X-und Y-Achse) und zwei Translationen (X-und Y-Achse) sehr kleine Werte annehmen. Die beiden instrumentenspezifischen Koordinatensysteme können somit im Wesentlichen durch eine Translation entlang der Z-Achse (Stehachse) und eine Rotation um die Z-Achse ineinander übergeführt werden. Die Erfassung der Tunnellaibung erfolgt mit einer spezifizierten Auflösung durch den Laserscanner 1, die Stationierung, d.h. die Überführung der lokalen Scannerpunkte in ein Projektkoordinatensystem wird durch Messung einer freien Stationierung durch die Totalstation 2 bewerkstelligt. Die beiden Messvorgänge erfolgen zeitgleich und werden durch einen feldtauglichen PC gesteuert. Der geometrische Zusammenhang zwischen den beiden instrumentenspezifischen Koordinatensystemen (Laserscanner 1 und Totalstation2) wird durch eine dreidimensionale Koordinatentransformation beschrieben, deren Parameter zuvor mittels einer Kalibrierung zu bestimmen sind. Im Verlauf der Kalibrierung werden die Koordinaten identer Punkte (Passpunkte) von beiden Instrumenten unmittelbar nacheinander bestimmt. Die Signalisierung dieser Punkte erfolgt getrennt für jedes Instrument, durch Prismen für die Totalstation bzw. durch Kugeln für den Scanner. Die Identität der Prismenzentren (Schnittpunkte der Prismenkanten) und der Mittelpunkte der korrespondierenden Kugeln wird bei dieser Kalibrierung vorausgesetzt. Die Verteilung und Anzahl der Passpunkte ist so zu wählen, dass die Transformationsparameter mit ausreichender Genauigkeit bestimmt werden können.

Mit dieser Einrichtung kann also mittels des Laserscanners 1 in einer Richtung ein Profil gescannt werden, z.B. ein Tunnelausbruch, und gleichzeitig in eine andere Richtung die Lage und Orientierung des Scanners 1 mittels der Totalstation 2 in Bezug auf Referenzpunkte mit hoher Genauigkeit ermittelt werden.

Im Zuge einer Aufnahme, d.h. eines Messvorganges, wird ein Hohlraumabschnitt von ca. 10 m (in Längsrichtung des Tunnels) mit einer vordefinierten Auflösung von ca. 1-2 cm in einem lokalen, scannerspezifischen Koordinatensystem erfasst. Die Aufnahme erfolgt hierbei in einer genäherten vertikalen Position, d.h. die Z-Achsen des Scanners 1 und der Totalstation 2 liegen näherungsweise parallel zur Lotrichtung. Ein wesentliches Merkmal des Systems besteht darin, dass die Aufnahme durch zwei fest miteinander verbundene Instrumente zeitgleich ausgeführt wird. Durch die Scannermessung werden die Punkte der Tunnellaibung im scannerspezifischen 3D-Koordinatensystem erfasst. Parallel dazu führt die Totalstation Messungen zu vorweg signalisierten Punkten des Tunnelvortriebsnetzes aus, die in der Folge zur Ableitung der Standpunktkoordinaten herangezogen werden. Diese Messung erfolgt unter Verwendung der "Power-Search-Funktion" der Totalstation zu einer spezifizierten Maximalanzahl von Referenzpunkten. Abweichend von der üblichen Vorgansweise wird die Messung mit abgeschaltetem Kompensator und ohne vorhergehende Horizontierung durchgeführt, d.h. die Z-Achse der Totalstation weicht im Allgemeinen von der Lotrichtung ab. Somit liegen als Ergebnis lokale Koordinaten der Referenzpunkte in einem kartesischen Koordinatensystem vor, dessen X,Y-Ebene nicht horizontal liegt. Die Zuordnung der Referenzpunktnummern erfolgt über ein spezielles Verfahren unmittelbar nach der Messung. Dabei werden den im lokalen Koordinatensystem der Totalstation bestimmten Referenzpunkten die korrespondierenden Punktnummern der im Projektsystem mit konventionellen Methoden bestimmten Netzpunkte zugewiesen. In einem weiteren Schritt werden die lokalen Scannerpunkte durch eine zweistufige 3D- Koordinatentransformation im Projektkoordinatensystem berechnet. Die erste Transformation führt hierbei die Scannerpunkte vom lokalen Scannersystem in das lokale System der Totalstation über. Die zweite Transformation dient zur Berechnung der Scannerpunkte im Projektkoordinatensystem. Die Parameter dieser Transformation werden für jede Instrumentenaufstellung im Zuge der freien Stationierung durch die Totalstation bestimmt. Hierbei kommen Qualitätskriterien zum Einsatz, um die Genauigkeits- und Zuverlässigkeitserfordernisse zu gewährleisten. Die Ergebnisse der Aufnahme stehen unmittelbar nach der Messung für weitere Auswertungen vor Ort zur Verfügung.

Der Messvorgang unterscheidet sich von konventionellen Scanner-Aufnahmen dadurch, dass die Einmessung eines Objektes mit Hilfe zweier starr verbundener, unterschiedlicher Instrumente (Laserscanner und Totalstation) simultan von einer Aufnahmeplattform aus durchgeführt wird und die Überführung der lokalen Scannerkoordinaten in globale Projektkoordinaten durch eine zweistufige räumliche Koordinatentransformation erfolgt. Hierbei wird die erste Transformation (System 1 -> System 2) durch die Geometrie der Aufnahmeplattform und die Montage von Scanner und Totalstation bestimmt. Die Parameter dieser Transformation sind Gegenstand einer geeigneten Kalibrierung und gewährleisten die Überführung des lokalen Scannerkoordinatensystems in das lokale System der Totalstation. Eine weitere Besonderheit des Verfahrens besteht in der automatischen Zuordnung homologer Punkte aus praktisch beliebig großen Punkthaufen in vernachlässigbarer Zeit unmittelbar nach der Aufnahme durch die Totalstation. Dies wird durch den Vergleich von Tetraedern unter Anwendung von Filter-, Such-, und Sortierverfahren erreicht.

## Patentansprüche

1. Einrichtung zum Vermessen, insbesondere zum Vermessen von Tunnelausbrüchen, mit einem Laserscanner (1), der auf einer Aufnahmeplattform (5) montiert und mit einer Auswerteeinrichtung verbunden ist, **dadurch gekennzeichnet, dass** die Aufnahmeplattform (5) mit dem Laserscanner (1) genau reproduzierbar verbunden ist und diese weiters mit einer Totalstation (2) genau reproduzierbar verbunden ist.

2. Einrichtung nach Anspruch 1, **dadurch gekennzeichnet, dass** der Laserscanner (1) und die Totalstation (2) übereinander angeordnet sind und die Vertikalachsen dieser Geräte annähernd zusammenfallen.

3. Verfahren zum Vermessen von Hohlräumen, insbesondere Tunnelausbrüchen, mittels eines auf einer Halterung angeordneten Laserscanners (1), der mit einer Auswerteeinrichtung verbunden ist, **dadurch gekennzeichnet, dass** gleichzeitig mit dem Scannen eines Abschnitts die Lage und Orientierung des Scanners (1) mittels einer Totalstation (2), die mit dem Scanner (1) in einer festen, genau reproduzierbaren Verbindung steht, ermittelt wird, dass mittels der mit der Auswerteeinrichtung verbundenen Totalstation (2) zu vorbestimmten Referenzpunkten gemessen wird und dass danach auf Grund einer zuvor durchgeführten Kalibrierung der relativen Lage von Laserscanner (1) und Totalstation (2) die Absolutkoordinaten der von dem Laserscanner (1) ermittelten Relativkoordinaten berechnet werden.

4. Verfahren nach Anspruch 3, **dadurch gekennzeichnet, dass** die Messungen der Totalstation (2) zu einer spezifizierten maximalen Anzahl von Referenzpunkten erfolgt, wobei eine Abweichung der Vertikal-Achse der Totalstation (2) von der Vertikalen zulässig ist und eine Zuordnung von Bezeichnungen der Referenzpunkte unmittelbar nach einer Messung erfolgt, wobei in einem lokalen Koordinatensystem der Totalstation (2) bestimmten Referenzpunkten die korrespondierenden Punktbezeichnungen der im Projektsystem bestimmten Netzpunkte zugewiesen werden.
